Europäisches Patentamt

European Patent Office

Office européen des brevets

(19)

(11) Veröffentlichungsnummer: **0 046 896**
**B1**

(12) **EUROPÄISCHE PATENTSCHRIFT**

(45) Veröffentlichungstag der Patentschrift:
01.02.84

(51) Int. Cl.³ **C 05 D 9/00**

(21) Anmeldenummer: **81106226.4**

(22) Anmeldetag: **10.08.81**

(54) **Düngemittel.**

(30) Priorität: **23.08.80 DE 3031893**

(43) Veröffentlichungstag der Anmeldung:
**10.03.82 Patentblatt 82/10**

(45) Bekanntmachung des Hinweises auf die Patenterteilung:
**01.02.84 Patentblatt 84/5**

(84) Benannte Vertragsstaaten:
**AT BE CH DE FR GB IT LI NL SE**

(56) Entgegenhaltungen:
**AU - A - 50 658**
**DE - A - 922 353**
**DE - A - 2 054 823**
**DE - A - 2 157 971**
**DE - A - 2 521 277**
**FR - A - 2 070 731**
**GB - A - 974 888**
**GB - A - 1 308 614**
**US - A - 2 988 441**
**US - A - 3 082 074**
**US - A - 3 645 922**

(73) Patentinhaber: **BAYER AG, Zentralbereich Patente, Marken und Lizenzen, D-5090 Leverkusen 1, Bayerwerk (DE)**

(72) Erfinder: **Heller, Harold, Dr., Hahnenweg 4, D-5000 Köln 80 (DE)**
Erfinder: **Schäpel, Dietmar, Dr., Johanniterstrasse 15, D-5000 Köln 80 (DE)**
Erfinder: **Hentschel, Claus, Semmelweissstrasse 89, D-5000 Köln 80 (DE)**
Erfinder: **Dahm, Manfred. Am Falkenberg 29, D-5090 Leverkusen 3 (DE)**

BUNDESDRUCKEREI BERLIN

Düngemittel

Die Erfindung betrifft Düngemittel aus einem wasserhaltigen Gel (Hydrogel) und nährstoffbeladenen Ionenaustauschern.

Fflanzennährstoffe enthaltende künstliche Substrate sind bekannt. So werden z. B. in US-Patentschriften 2 988 441 und 3 373 009 als Pflanzenwachstumsmedien geeignete Schaumstoffe beschrieben, die aus einem wasserunlöslichen, stabilen, zumindest teilweise offenporigen Matrixmaterial bestehen, in welches Mischungen aus nährstoffbeladenen Kationen- und Anionenaustauschern bzw. Mischungen aus mit Nitrationen beladenen Anionenaustauschern und schwerlöslichen Düngemitteln fest eingebettet sind. Als Matrixmaterialien werden Polyurethan-, Epoxid-, Kautschuk- und Vinylharzschäume genannt. Solche Pflanzennährstoffe enthaltenden Schaumstoffe sind zwar als inerte Materialien für die erdelose Pflanzenanzucht, nicht aber als universell anwendbare Düngemittel geeignet, weil die Abgabe der Nährstoffe aus diesen Schäumen bei einer Anwendung als Düngemittel zu stark diffusionsbehindert ist. Für eine ausreichende, wachstumsgerechte Nährstoffversorgung der Pflanzen ist es erforderlich, daß die Pflanzenwurzeln in den Schaumstoff eindringen und auf diese Weise in enge Berührung mit den nährstoffhaltigen Ionenaustauschern und schwerlöslichen Düngemitteln kommen können. Ist diese Voraussetzung nicht erfüllt, so kommt es infolge starker Diffusionsbehinderung leicht zu einer unzureichenden Nachlieferung der Nährstoffe von den in den Schaumstoff eingelagerten Ionenaustauschern und schwerlöslichen Düngemitteln und damit zu einem reduzierten Pflanzenwachstum oder zu speziellen Mangelerscheinungen an den Pflanzen.

Weiterhin sind Pflanzennährstoffe enthaltende Hydrogele bekannt. Zum Beispiel werden in der EP-PA 0 006 299 unvernetzte nährstoffhaltige Hydrogele als Wachstumsmedien für Pflanzen beschrieben. Diese Hydrogele sind thixotrop und können daher nur bei Anwendung zusätzlicher Hilfsmittel zur Erhaltung der äußeren Form für bestimmte Zwecke, vor allem als Anzuchtsubstrate, eingesetzt werden. Ein weiterer wesentlicher Nachteil dieser Gele ist, daß ihre Struktur unter dem Einfluß der inkorporierten Düngesalze leicht zusammenbrechen kann. Durch die Verwendung schwerlöslicher anorganischer oder organischer Pflanzennährstoffe bzw. umhüllter Nährstoffe mit verzögerter Nährstoff-Freisetzung, z. B. sogenannter Depotdünger, läßt sich dieser Nachteil nur teilweise beheben aber nicht mit der erforderlichen Sicherheit ausschließen (s. die entsprechenden Angaben in der Patentanmeldung auf Seite 3 und Seite 9).

Aus der DE-A 2 521 277 ist die Möglichkeit bekannt, bei der Herstellung spezieller Polyurethanpolyharnstoff-Hydrogele Pflanzennährstoffe und Düngemittel einzugelen. Es hat sich jedoch gezeigt, daß Düngemittel dieser Art nur in beschränktem Umfang einsetzbar sind. Werden bei ihrer Herstellung wasserlösliche Nährsalze eingesetzt, so diffundieren diese bei der Anwendung der Hydrogele sehr schnell aus dem Gel. Dies führt zu den bekannten negativen Folgeerscheinungen: Bei der Anwendung der Hydrogele im Freiland werden die freigesetzten Nährsalze zum größten Teil in den Unterboden ausgewaschen und gehen infolgedessen verloren; bei der Anwendung der Hydrogele in der Anstautechnik können überhöhte Salzkonzentrationen in den Nährlösungen entstehen, so daß es zu Versalzungsschäden an den Pflanzen kommt. Werden bei der Herstellung dieser Hydrogele jedoch schwerlösliche anorganische oder organische Nährstoffe oder Depotdünger mit Langzeitwirkung verwendet, so beobachtet man eine stark verzögerte Nährstoffabgabe. Diese kann bei Pflanzen mit großem Nährstoffbedarf zu einer mangelhaften Nährstoffversorgung führen.

Es wurde nun gefunden, daß man Düngemittel auf Basis Pflanzennährstoffe enthaltender Hydrogele erhält, die eine hohe Strukturstabilität auch unter dem Einfluß der Pflanzennährstoffe aufweisen und aus denen die Nährstoffe ohne Diffusionsbehinderung in der für die Pflanzen optimalen Menge und Geschwindigkeit sowohl bei der Anwendung in Erd- als auch in Hydrokulturen freigesetzt werden, wenn man mit Pflanzennährstoffen beladene Ionenaustauscher in kovalent vernetzte Hydrogele einbettet.

Aus der US-A 3 645 922 sind kovalent vernetzte Hydrogele bekannt, die Mischungen aus speziellen schwach basischen und schwach sauren pulverförmigen Ionenaustauschern enthalten. Diese sogenannten Ionenaustauscher-Verbundmaterialien wurden jedoch wegen ihrer besonderen Eigenschaft, Ionen aus Lösungen bei niedriger Temperatur zu adsorbieren, und durch Elution mit Wasser oder Kochsalzlösung bei einer über der Adsorptionstemperatur liegenden Temperatur regenerierbar zu sein, ausschließlich für die Wasseraufbereitungstechnik zur Enthärtung und Entsalzung salzreicher Wässer vorgeschlagen.

Die Erfindung betrifft daher Düngemittel auf Basis Pflanzennährstoffe enthaltender Hydrogele; die Düngemittel sind dadurch gekennzeichnet, daß sie in kovalent vernetzte Hydrogele eingebettete, mit Pflanzennährstoffen beladene Ionenaustauscher enthalten.

Die Erfindung betrifft ferner ein Verfahren zur Herstellung von Düngemitteln auf Basis Pflanzennährstoffe enthaltender Hydrogele; das Verfahren ist dadurch gekennzeichnet, daß man mit Pflanzennährstoffen beladene Ionenaustauscher in kovalent vernetzte Hydrogele eingelt.

Mit Pflanzennährstoffen beladene Ionenaustauscher sind bekannt; sie sind z. B. in der US-A-3 082 074, in der DE-C-2 338 182 und bei E. J. Hewitt »Sand and Water Culture Methode used in the Study of Plant Nutrition«, Commonwealth Agricultural Bureaux, Techn. Communication No. 22, 2nd Edition, 1966, Seite 61 u. f. beschrieben.

Zum Beladen mit Pflanzennährstoffen eignen sich sowohl anorganische Ionenaustauscher, natürliche und modifizierte natürliche Ionenaustauscher, wie Braunkohle und sulfonierte Braunkohle, als auch Kunstharz-Ionenaustauscher. Letztere werden wegen ihrer höheren Kapazität bevorzugt. Die Kunstharz-Ionenaustauscher können gelartig oder makroporös sein und es kann sich um Polymerisations- oder Kondensationsharze handeln. In den erfindungsgemäßen Düngemitteln verwendbare Kunstharz-Ionenaustauscher sind die bekannten schwachbasischen, mittelbasischen und starkbasischen, primäre, sekundäre und/oder tertiäre Aminogruppen und/oder quaternäre Ammonium-, Sulfonium- oder Phosphoniumgruppen aufweisenden Anionenaustauschharze, die schwachsauren, mittelsauren und starksauren, phenolische Hydroxylgruppen, Carbonsäure-, Phosphinsäure-, Phosphonsäure- und/oder Sulfonsäuregruppen aufweisenden Kationenaustauschharze sowie die Chelatkomplexe bildenden, z. B. Aminocarbonsäure- oder Aminophosphonsäuregruppen aufweisenden Chelatharze.

Ionenaustauscher der genannten Art sind bekannt. Sie und ihre Herstellung werden z. B. beschrieben in F. Helfferich, Ionenaustauscher, Band 1, 1959, Seiten 10 bis 106 und Ullmanns Enzyklopädie der technischen Chemie, 4. Auflage, Band 13, 1977, Seiten 292 bis 309.

Chelatharze mit Aminophosphonsäuregruppen und ihre Herstellung werden z. B. in der GB-A-859 834 beschrieben.

Die Beladung der Ionenaustauscher mit Nährstoffen erfolgt z. B. nach den in der US-A-3 082 074, der DE-C-2 338 182 oder der DE-A-3 020 422 beschriebenen Verfahren.

Als nährstoffbeladene Ionenaustauscher werden vorzugsweise Gemische aus mit Nährstoffanionen beladenen Anionenaustauschern und mit Nährstoffkationen beladenen Kationenaustauschern verwendet. Besonders bevorzugt sind solche Mischungen, die mit anionischen Chelatkomplexen von Mikronährstoffkationen und mit weiteren Makro- und Mikronährstoffanionen beladene Anionenaustauscher enthalten. In den Ionenaustauscher-Gemischen wird das Verhältnis beladener Anionenaustauscher/beladener Kationenaustauscher vorteilhaft so gewählt, daß die Menge an sauren Gruppen 10 bis 90%, vorzugsweise 10 bis 50%, bezogen auf die Summe der sauren und basischen Gruppen des Gemisches beträgt.

Die Ionenaustauscher sind in den erfindungsgemäßen Düngemitteln in einer solchen Menge enthalten, daß das Gewichtsverhältnis Ionenaustauscher/Hydrogel 10 : 90 bis 90 : 10, vorzugsweise 30 : 70 bis 70 : 30 beträgt.

Die in den erfindungsgemäßen Düngemitteln zu verwendenden kovalent vernetzten Hydrogele können aus den verschiedenartigsten gelbildenden Substanzen hergestellt werden. Als gelbildende Substanzen seien beispielsweise genannt: Gelbildende Naturstoffe, wie Gelatine und Pektin, halbsynthetische Produkte wie Cellulosederivate, z. B. Carboxymethylcellulose, oder synthetische gelbildende Substanzen wie Polyvinylalkohol, wäßrige Dispersionen von Polyethern mit endständigen N-Alkylolgruppen, wie sie in der US-A- 4 160 754 beschrieben sind und, vorzugsweise, Polyisocyanat-Prepolymere.

Die kovalente Vernetzung der gelbildenden Substanzen erfolgt nach an sich bekannten Verfahren mit an sich bekannten Vernetzungsmitteln, wie sie z. B. in der US-A-3 645 922 beschrieben sind.

Der Gehalt der in den erfindungsgemäßen Düngemitteln zu verwendenden Hydrogele an makromolekularer Substanz beträgt mindestens 5 Gew.-%, vorzugsweise 5 bis 40 Gew.-%, bezogen auf das Gesamtgewicht des Hydrogels.

Unter makromolekularer Substanz ist im Rahmen der vorliegenden Erfindung die Summe aus gelbildender Substanz und Vernetzungsmittel zu verstehen. Die Menge an Vernetzungsmittel ist von der Zahl der im Molekül der gelbildenden Substanz vorhandenen vernetzbaren Gruppen und der für die Geleigenschaften gewünschten Vernetzungsdichte abhängig. Das Vernetzungsmittel kann sowohl im stöchiometrischen Verhältnis, als auch in einem Überschuß oder Unterschuß, bezogen auf die im Molekül vorhandenen vernetzbaren Gruppen, eingesetzt werden. Im allgemeinen beträgt in den zur Herstellung der Hydrogele zu verwendenden makromolekularen Substanzen das Gewichtsverhältnis gelbildende Substanz zu Vernetzungsmittel 1 : 0,01 bis 0,5, vorzugsweise 1 : 0,03 bis 0,3. Die große Schwankungsbreite der Gewichtsverhältnisse erklärt sich aus dem unterschiedlichen Aufbau der erfindungsgemäß einsetzbaren gelbildenden Substanzen und der für die gewünschten Geleigenschaften erforderlichen Vernetzungsdichten der makromolekularen Substanzen. Unter Vernetzungsdichten werden im Rahmen der vorliegenden Erfindung die mittleren Molekulargewichte der zwischen den Vernetzungspunkten befindlichen Molekülteile verstanden. Die Vernetzungsdichten der erfindungsgemäß zu verwendenden makromolekularen Substanzen betragen etwa 100 bis 1500.

Als besonders geeignet haben sich für die Herstellung der in den erfindungsgemäßen Düngemitteln zu verwendenden Hydrogele kovalent vernetzte Polyurethanpolyharnstoffgele erwiesen. Diese Gele können als solche oder unter Zusatz an sich bekannter anderer gelbildender Substanzen, z. B. Carboxymethylcellulose, Gelatine, Alginate, eingesetzt werden. In diesen mit anderen Gelbildnern modifizierten Polyurethanpolyharnstoffgelen beträgt das Gewichtsverhältnis Polyurethanpolyharnstoff zu andere gelbildende Substanzen vorteilhaft 1 : 0,03 bis 0,3, vorzugsweise 1 : 0,05 bis 0,1.

Diese vorzugsweise verwendeten Polyurethanpolyharnstoff-Hydrogele sind durch Umsetzung von

3

Prepolymeren und/oder Semiprepolymeren mit Wasser erhältlich, wobei bei der Gelbildung außerdem pflanzenverträgliche mehrwertige Alkohole, wie Glycerin, Sorbit, zugefügt werden können.

Die Prepolymere und Semiprepolymere weisen Isocyanatendgruppen auf und werden in an sich bekannter Weise durch Umsetzung von Polyethern, die mindestens 30 Gew.-% Ethylenoxid-Einheiten enthalten, mit einer überschüssigen Menge an Di- und/oder Polyisocyanat hergestellt. Bei dieser Umsetzung wird die Menge an Di- und/oder Polyisocyanat vorzugsweise so bemessen, daß das NCO/OH-Verhältnis in Abhängigkeit von den gewünschten Eigenschaften des herzustellenden Prepolymer-Typs 2 bis 10 beträgt. Der Gehalt des Prepolymers bzw. Semiprepolymers an Isocyanatgruppen beträgt vorteilhaft 2 bis 10 Gew.-%, vorzugsweise 3 bis 5 Gew.-%, bezogen auf das Gewicht des Prepolymers bzw. Semiprepolymers.

Ausgangsmaterial für die Prepolymere bzw. Semiprepolymere sind mindestens zwei aktive Wasserstoffatome aufweisende Polyether mit einem Molekulargewicht von 500 bis 10 000, vorzugsweise 2000 bis 8000, die mindestens 30 Gew.-% an Ethylenoxidgruppen, bezogen auf das Gewicht des Polyethers, enthalten. Derartige Polyether werden durch Umsetzung von Verbindungen mit reaktionsfähigen Wasserstoffatomen, z. B. Di- oder Polyalkoholen, Di- oder Polyphenolen, aliphatischen oder aromatischen Di- oder Polyaminen, mit Ethylenoxid und gegebenenfalls Alkylenoxiden wie Propylenoxid, Butylenoxid, Styroloxid, Epichlorhydrin oder Gemischen dieser Alkylenoxide hergestellt.

Weitere Ausgangsverbindungen für die Prepolymere bzw. Semiprepolymere sind aliphatische, cycloaliphatische, araliphatische, aromatische oder heterocyclische Polyisocyanate, wie sie z. B. von W. Siefgen, Liebigs Annalen der Chemie, Band 562, Seiten 75 – 136 beschrieben werden.

Die erfindungsgemäßen Düngemittel können alle essentiellen Makro- und Mikronährstoffe enthalten, wobei anionische Nährstoffe wie Nitrat, Phosphat, Sulfat, Molybdat und Borat an Anionenaustauscher und kationische Nährstoffe, wie Kalium, Ammonium, Calcium und Magnesium an Kationenaustauscher gebunden sind. Mikronährstoffe wie Eisen, Mangan, Kupfer, Zink können als Kationen an Kationenaustauscher oder als anionische Chelatkomplexe an Anionenaustauscher gebunden sein. Bevorzugt enthalten die erfindungsgemäßen Düngemittel die für eine gesunde Pflanzenentwicklung besonders wichtigen Makronährstoffe Stickstoff, Phosphor und Kalium, wobei Stickstoff als Nitrat- und Ammoniumstickstoff im Molverhältnis 90 : 10 bis 50 : 50, Phosphor als Dihydrogenphosphat oder Hydrogenphosphat sowie die Mikronährstoffe Bor als Borat, Molybdän als Molybdat und Eisen, Kupfer, Mangan und Zink als anionische Chelatkomplexe vorliegen können.

Die Mengenverhältnisse der einzelnen Nährstoffe können in weiten Grenzen schwanken und den speziellen Nährstoffbedürfnissen der verschiedenen Pflanzenarten entsprechend gewählt werden. Besonders geeignete Mengenverhältnisse sind in der Literatur beschrieben (s. z. B. US-A-3 082 074; DE-C-2 338 182 sowie E. J. Hewitt loc. cit.).

Die Herstellung der erfindungsgemäßen Düngemittel kann auf verschiedene Weise erfolgen. Man kann z. B. alle Komponenten, d. h. die gelbildende Substanz, Vernetzungsmittel, Wasser und Ionenaustauschharz auf einmal zusammengeben und intensiv vermischen. Man kann aber auch die Komponenten nacheinander zusammengeben. Bei der Verwendung von Polyisocyanat-Prepolymeren bzw. Semiprepolymeren als gelbildender Substanz wird bei der mehrstufigen Arbeitsweise das Prepolymer bzw. Semiprepolymer zunächst mit einem Teil des Wassers vermischt; dann wird in diese Mischung das mit dem restlichen Wasser angefeuchtete Ionenaustauscherharz eingeführt. Gemäß einer technisch besonders vorteilhaften Variante dieses Mehrstufenverfahrens wird die gelbildende Substanz zunächst intensiv mit Wasser vermischt und dann das trockene perlförmige Ionenaustauschharz zugemischt.

Bei diesen Verfahrensweisen kann die Förderung, Dosierung und Mischung der Einzelkomponenten oder Komponentengemische mit den für den Fachmann an sich bekannten Vorrichtungen erfolgen. Die Förderung und Dosierung des perlförmigen Ionenaustauschharzes ist z. B. mit einer geeigneten Schnecke möglich. Die anschließende Zumischung des Ionenaustauschharzes wird z. B. in einer Rührwerksmischkammer durchgeführt.

Die Herstellung der erfindungsgemäßen Düngemittel kann kontinuierlich oder diskontinuierlich vorgenommen werden. Die Arbeitsweise hängt von der Form ab, die man dem erfindungsgemäßen Düngemittel geben möchte. Wenn man das Düngemittel z. B. unmittelbar in einen Blumentopfuntersetzer eingeben möchte, um eine Haftung am Untersetzer zu erzielen, so ist die diskontinuierliche Arbeitsweise vorteilhaft. Soll das Düngemittel jedoch in Stücken geeigneter Abmessungen hergestellt werden, dann ist eine kontinuierliche Verfahrensweise günstiger. In diesem Fall produziert man zunächst eine endlose Folie, die man anschließend in einzelne Stücke zerteilen kann.

Bei der kontinuierlichen Herstellung kann das nährstoffhaltige gelfähige Gemisch auch, bevor es durch die Gelbildung erstarrt, gesprüht, gegossen oder gerakelt werden. Hierbei kann das gelfähige Gemisch auf die verschiedenartigsten Materialien auf Basis von natürlichen oder synthetischen Rohstoffen aufgebracht werden, z. B. auf Steinwollmatten, Vliese, Gewirke, Gestricke, Schaumfolien und Geweben.

Die Bedingungen während der Gelbildung lassen sich auch in der Weise variieren, daß man entweder kompakte oder geschäumte Düngemittel erhält. Wird z. B. Luft ins gelfähige Gemisch eingeschlagen, so erhält man Schaumgele.

**0 046 896**

In die erfindungsgemäßen Düngemittel können zusätzlich zu den mit Nährstoffen beladenen Ionenaustauschern die verschiedenartigsten Füll- und Zusatzstoffe eingearbeitet werden, indem man diese Zusatzstoffe bei der Herstellung des Düngemittels der Wasserkomponente zumischt. Als Füll- und Verstärkungsstoffe kommen z. B. Ruß oder Fasern organischer oder anorganischer Herkunft in Frage. Als Zusatzstoffe können z. B. Farbstoffe, Farbpigmente, anorganische oder organische Salze, Mineralien, Algizide, Fungizide, Pflanzenschutzmittel, Wachstumsregulatoren zugesetzt werden. Diese Zusatzstoffe können weiterhin mit einer Hüllsubstanz überzogen werden oder in einem festen Kunststoff homogen dispergiert vorliegen. Als Beispiele für solche umhüllten Zusatzstoffe seien beispielsweise genannt: Anorganische Salze wie Calciumphosphat, Calciumsulfat, Magnesiumsulfat. Als Hüllsubstanzen bzw. feste Kunststoffe kommen z. B. Epoxid-, Polyester-, Polyacrylat-, Polyethylen-, Polyurethan-Harze, Wachs oder Schwefel in Frage.

Die erfindungsgemäßen Düngemittel können den unterschiedlichsten natürlichen und synthetischen Substraten, in denen Pflanzen wachsen, zugemischt bzw. in diese eingearbeitet werden. Sie lassen sich außerdem besonders vorteilhaft als Düngemittel in Hydrokulturen verwenden.

Die erfindungsgemäßen Düngemittel können in den verschiedensten Formen, z. B. als Granulat, Platte, Folie, Block oder Stab, eingesetzt werden.

Die Anwendung geschieht nach den in der Landwirtschaft und im Gartenbau üblichen Methoden. Beispielsweise lassen sich die erfindungsgemäßen Düngemittel mit dem natürlichen oder synthetischen Substrat vermengen oder durch Umgraben oder Pflügen in den Boden einarbeiten. Die erfindungsgemäßen Düngemittel lassen sich ferner mit besonderem Vorteil als Unterlegplatten für die Düngung von Pflanzen in Einzeltöpfen verwenden. Die leichte Auswechselbarkeit der handlichen Formstücke nach Erschöpfung der Ionenaustauscher ist dabei von besonderem Nutzen. Darüber hinaus wurde überraschenderweise gefunden, daß die Langzeitwirkung nährstoffbeladener Ionenaustauscher in Form der erfindungsgemäßen Düngemittel, z. B. bei der Düngung von Einzelpflanzen in Hydrokulturen, wesentlich größer ist als die der Ionenaustauscher in loser Form.

Die erfindungsgemäßen Düngemittel können gegebenenfalls im Gemisch mit anderen Dünge-, Streck- bzw. Emulgiermitteln und/oder Pflanzenschutzmitteln verwendet werden.

Die Menge, in der die erfindungsgemäßen Düngemittel eingesetzt werden, kann in weiten Bereichen schwanken. Sie hängt im wesentlichen vom jeweiligen Nährstoffbedarf der Pflanzen ab. Im allgemeinen betragen die Aufwendungen zwischen 0,001 und 0,1 l pro 1 Kulturmedium, vorzugsweise zwischen 0,002 und 0,05 l je 1 Kulturmedium bei Anwendung granulierten Materials oder — bei Anwendung von Formstücken — zwischen 5 und 100 g je Pflanze, vorzugsweise zwischen 5 und 50 g je Pflanze, bezogen auf die Menge an inkorporierten Ionenaustauschern.

Die erfindungsgemäßen Düngemittel eignen sich zur langfristigen und gleichmäßigen Versorgung von Nutzpflanzen und Zierpflanzen. Zu den Nutzpflanzen zählen z. B. Küchenkräuter wie

Petersilie (Petroselinum sativum), Schnittlauch (Allium schoenoprasum), Majoran (Origanum majorana); Gemüsearten wie Salat (Lactuca sativa), Radieschen (Raphanus sativus), Gurken (Cucumis sativus), Tomaten (Solanum lycopersicum); Beerenobst wie Erdbeeren (Fragaria speciosa), Johannisbeeren (Ribes rubrum petraeum), Stachelbeeren (Ribes grossularia), Wein (Vitis vinifera); Ananas (Ananas sativus); Citrus in Sorten; Kirsche (Prunus); Pfirsich (Prunus persica).

Als Zierpflanzen seien beispielsweise genannt:

Aechmea (Aechmea fasciata), Efeu (Hedera helix), Croton (Codiaeum variegatum), Palme (Chamaedorea elegans), Philodendron (Philodendron red emerald; Philodendron scandens; Monstera deliciosa), Euphorbien (Euphorbia pulcherrima), Farne (Adiantum scutum roseum), Gummibaum (Ficus elastica Decora, Ficus robusta, Ficus diversifolia, Ficus benjamina), Aphelandra (Aphelandra squarrosa dania), Maranta (Maranta makoyana), Chrysanthemen (Yellow Delaware), Anthurien (Anthurium scherzerianum), Ericaceaen (Erica gracilis), Azaleen (Rhododendron simsii), Dieffenbachien (Dieffenbachia amoena Tropic white), Dracaenen (Dracaena terminalis, Dracaena deremensis), Hibiscus (Hibiscus rosasinensis), Frauenschuh (Cypripedium), Guzmanie (Guzmania minor), Pachystachys (Pachystachys), Peperomia (Peperomia glabella), Geweihfarn (Platycerium alcicorne), Scindapsus (Scindapsus aureus), Spathiphyllum (Spathiphyllum wallisii), Vriesea (Vriesea splendens).

Ein wesentlicher Vorteil der erfindungsgemäßen Düngemittel gegenüber den aus der EP-PA-0 006 299 bekannten, nährstoffhaltigen, anorganischen, organischen und natürlichen Hydrogelen liegt in einer wesentlich verbesserten Strukturstabilität.

Die erfindungsgemäßen Düngemittel sind unabhängig vom Wassergehalt des Gels und innerhalb eines weiten Temperaturbereichs uneingeschränkt lagerfähig, ohne daß ihre Struktur zerstört wird oder ihre Düngewirksamkeit abnimmt.

Ein weiterer Vorteil der neuen Düngemittel ist, daß sie beim Einbringen in wasserhaltige Substrate (Kulturmedien) praktisch keine Nährsalze durch unkontrollierte Diffusion verlieren. Pflanzenschädi-

5

gende Salzanreicherungen treten daher bei ihrer Verwendung nicht auf. Andererseits wird überraschenderweise die Nährstoffabgabe durch die Inkorporation der nährstoffbeladenen Ionenaustauscher in die Hydrogele in keiner Weise behindert. Die erfindungsgemäßen Düngemittel stellen deshalb eine wertvolle Verbesserung der gemäß DE-A-2 521 277 herstellbaren nährstoffhaltigen Polyurethanpolyharnstoff-Hydrogele dar. Von dem aus den US-A-2 988 441 und 3 373 009 bekannten Wachstumsmedien auf Schaumstoffbasis unterscheiden sich die erfindungsgemäßen Düngemittel durch ihre Gelstruktur mit ihrem hohen Wassergehalt. Vor diesen bekannten Wachstumsmedien zeichnen sich die erfindungsgemäßen Düngemittel dadurch aus, daß bei ihnen die Nährstoffabgabe der inkorporierten nährstoffbeladenen Ionenaustauscher nicht diffusionsbehindert ist. Deshalb entfällt bei ihrer Verwendung die Notwendigkeit, für eine enge Kontaktmöglichkeit zwischen den Pflanzenwurzeln und den nährstoffbeladenen Ionenaustauschern zu sorgen, so daß die erfindungsgemäßen Düngemittel — im Gegensatz zu den bekannten Wachstumsmedien auf Schaumstoffbasis — universell anwendbar sind. Der Vorteil der erfindungsgemäßen Düngemittel, die Nährstoffe unbehindert abzugeben, gilt auch gegenüber der Anwendung nährstoffbeladener Ionenaustauscher in Kunststoff-Kleinbehältern (sogenannten Nährstoffbatterien). Diese Nährstoffbatterien haben bisher bei der Düngung von Einzelpflanzen in Hydrokulturen wegen der leichten Auswechselbarkeit nach der Erschöpfung der Ionenaustauscher vielfache Anwendung gefunden. Bei diesen Nährstoffbatterien ist jedoch die von den Ionenaustauschern pro Zeiteinheit und Flächeneinheit an die Pflanzenwurzeln abgegebene Nährstoffmenge infolge des geringen Diffusionsquerschnittes der Düngebatterien oftmals zu gering, um den Nährstoffbedarf der Pflanzen sicherzustellen.

Bei den in den nachfolgenden Beispielen angegebenen Teilen handelt es sich um Gewichtsteile, sofern nichts anderes angegeben ist.

## Beispiel 1

In 70 Teilen entmineralisiertem Wasser, das eine Temperatur von +5°C hat, werden 30 Teile des Prepolymers A, dessen Herstellung nachstehend beschrieben ist, durch intensives Rühren innerhalb von 15 Sekunden dispergiert. Dieser Reaktionsmischung werden 23 Teile des nährstoffhaltigen, wasserunlöslichen Ionenaustauschergemisches J1, dessen Herstellung nachstehend beschrieben ist, und das 40 Gew.-% Wasser enthält, auf einmal zugefügt und innerhalb von weiteren 15 Sekunden mit der Mischung intensiv verrührt. Die Reaktionsmischung wird anschließend in eine offene Form (Grundfläche 21 × 21 cm) gegossen. 130 Sekunden nach Beginn der Vermischung der Reaktionskomponenten erfolgte die Gelbildung. Während der Gelbildung schäumt das Gemisch bis zu einer Höhe von 4 mm auf. Nach weiteren 5 Minuten wird das in Form einer geschäumten Gelfolie anfallende Düngemittel (Abmessungen: 21 × 21 × 0,4 cm) der Form entnommen. Diese geschäumte Gelfolie kann z. B. als Unterlegplatte für die Düngung von Einzeltöpfen in Hydrokulturen verwendet werden. Der Gehalt der erhaltenen Gelfolie an nährstoffbeladenem Ionenaustauschergemisch (wasserfrei) beträgt: 11 Gew.-% bzw. 80 g/dm³. Der Gesamtwassergehalt beträgt: 64 Gew.-% bzw. 450 g/dm³.

Die geschäumte Gelfolie kann auch mit besonderem Vorteil zum Auskleiden von zur Pflanzenanzucht bestimmten Containern verwendet werden.

Das verwendete Prepolymer A und das nährstoffbeladene Ionenaustauschergemisch J1 wurden wie folgt erhalten:

## Prepolymer A

Eine Mischung aus 159 Teilen Toluylendiisocyanat (80% 2,4- und 20% 2,6-Isomeres) und 1200 Teilen eines Polyethers, der durch Anlagerung von 60 Gew.-% Ethylenoxid und 40 Gew.-% Propylenoxid an Glyzerin erhalten worden ist und eine Hydroxylzahl von 28 besitzt, wird unter Rühren innerhalb von 30 Minuten auf 80°C erwärmt. Bei dieser Temperatur wird die Reaktionsmischung weitere 3 Stunden gerührt und dann auf Raumtemperatur abgekühlt. Das erhaltene Prepolymer hat einen Isocyanatgehalt von 3,7% und eine Viskosität von 9500 mPas bei 25°C.

## Nährstoffbeladenes Ionenaustauschergemisch J1

1000 ml eines schwachbasischen Anionenaustauschers in der freien Basenform, hergestellt aus einem mit 4% Divinylbenzol vernetzten Styrolperlpolymerisat durch Aminomethylierung (Gehalt an schwachbasischen Gruppen: 3 mol/l), werden in 1000 ml vollentsalztem Wasser suspendiert und unter Rühren bei Zimmertemperatur innerhalb von 3 Stunden nacheinander mit

| 5,96 g | Ethylendiamin-tetraessigsäure |
|--------|-------------------------------|
| 27 g | Phosphorsäure (ca. 85%ig) |

0 046 896

| | |
|---|---|
| 0,57 g | $Na_2B_4O_7 \cdot 10\,H_2O$ |
| 0,11 g | $(NH_4)_6Mo_7O_{24} \cdot 4\,H_2O$ |
| 5 g | $FeSO_4 \cdot 7\,H_2O$ |
| 0,3 g | $MnSO_4 \cdot H_2O$ |
| 0,045 g | $CuSO_4 \cdot 5\,H_2O$ |
| 0,05 g | $ZnSO_4 \cdot 7\,H_2O$ |
| 250 g | Salpetersäure (ca. 65%ig) |

versetzt. Anschließend werden in die Suspension des mit Nitrat, Phosphat und Mikronährstoffen beladenen schwachbasischen Anionenaustauschers unter Rühren bei Zimmertemperatur nacheinander innerhalb von 2 Stunden eingetragen:

570 ml eines handelsüblichen starksauren Kationenaustauschers auf der Basis eines mit 8% Divinylbenzol vernetzten Styrolperlpolymerisates, 51,5 g Kaliumhydroxid (85%ig) und 35 g Ammoniaklösung (ca. 25%ig).

Nach einer Rührzeit von weiteren 16 Stunden beträgt der pH-Wert in der wäßrigen Phase 4,6. Das mit Nährstoffen beladene Ionenaustauschergemisch wird durch Absaugen der wäßrigen Phase isoliert.

| | |
|---|---|
| Ausbeute: | 1980 ml = 1630 g Ionenaustauschergemisch |
| Wassergehalt: | 40% |
| Gehalt an Nitratstickstoff: | 20,4 mg/g |
| Gehalt an Ammoniumstickstoff: | 4,1 mg/g |
| Gehalt an Phosphor: | 4,7 mg/g |
| Gehalt an Kalium: | 17,9 mg/g |

Beispiel 2

In 25,6 Teilen entmineralisiertem Wasser einer Temperatur von +5°C werden 3,4 Teile des in Beispiel 1 beschriebenen Prepolymers A durch intensives Rühren innerhalb von 15 Sekunden dispergiert. Dieser Reaktionsmischung werden 23 Teile des in Beispiel 1 beschriebenen Ionenaustauschergemisches J1 zugesetzt und innerhalb von weiteren 15 Sekunden intensiv verrührt. Die Reaktionsmischung wird dann in eine offene Form (Grundfläche: 11,5 × 21 cm) gegossen. 115 Sekunden nach dem Beginn des Vermischens der Reaktionskomponenten erfolgt die Gelbildung. Diese führt innerhalb von 10 Sekunden zu einer kompakten Masse. Man erhält eine massive Gelfolie mit den Abmessungen 21 × 11,5 × 0,4 cm, die z. B. als Unterlegplatte für die Düngung von Einzeltöpfen in Hydrokulturen verwendet werden kann. Der Gehalt der Platte an nährstoffbeladenem Ionenaustauschergemisch (wasserfrei) beträgt: 26 Gew.-% bzw. 140 g/dm$^3$. Der Gesamtwassergehalt beträgt 67 Gew.-% bzw. 360 g/dm$^3$.

Beispiel 3

In 117 Teilen entmineralisiertem Wasser (Temperatur: +5°C) werden 23 Teile des nachstehend beschriebenen Prepolymers B durch intensives Rühren innerhalb von 15 Sekunden dispergiert. Dieser Mischung werden 190 Teile des in Beispiel 1 beschriebenen nährstoffhaltigen, wasserunlöslichen Ionenaustauschergemisches J1 (Wassergehalt: 40 Gew.-%) mit einem Male zugesetzt und 15 Sekunden intensiv vermischt. 110 Sekunden nach dem Beginn des Vermischungsvorganges erfolgt die Gelbildung. Sie führt innerhalb von 10 Sekunden zur Bildung eines elastischen, kompakten, perlförmige Ionenaustauscher enthaltenden Hydrogels. Diese kompakte Masse läßt sich durch Brechen in ein grobkörniges Düngergranulat überführen, das natürlichem Substrat zugemischt werden kann. Der Gehalt des Hydrogels an nährstoffbeladenem Ionenaustauschergemisch (wasserfrei) beträgt 34,5 Gew.-%; der Gesamtwassergehalt beträgt 58,5 Gew.-%.

Das verwendete Prepolymer B wurde wie folgt erhalten:

Eine Mischung aus 256 Teilen Toluylendiisocyanat (80 Gew.-% 2,4- und 20 Gew.-% 2,6-Isomeres) und 2000 Teilen eines Polyethers, der durch Ablagerung von 40 Gew.-% Ethylenoxid und 60 Gew.-% Propylenoxid an Glycerin erhalten worden ist und eine Hydroxylzahl von 21 besitzt, wird unter Rühren innerhalb von 30 Minuten auf 80°C erwärmt. Bei dieser Temperatur wird die Reaktionsmischung weitere 3 Stunden gerührt und dann auf Raumtemperatur abgekühlt. Das erhaltene Prepolymer weist einen Isocyanatgruppengehalt von 4 Gew.-% und eine Viskosität von 6200 mPas bei 25°C auf.

7

### Beispiel 4

In 6 Teilen entmineralisiertem Wasser einer Temperatur von 25°C werden 3 Teile des Prepolymers C, dessen Herstellung nachstehend beschrieben ist, durch intensives Rühren innerhalb von 30 Sekunden dispergiert. Dieser Reaktionsmischung werden 23 Teile des in Beispiel 1 beschriebenen Ionenaustauschergemisches J1, das 40 Gew.-% Wasser enthält, zugesetzt und innerhalb von 25 Sekunden verrührt. Danach werden 3 Teile einer 5gew.-%igen wäßrigen Kaliumhydroxidlösung zugegeben und innerhalb von 5 Sekunden intensiv vermischt. Die Gelbildung erfolgt sofort und führt zu einem kompakten elastischen Hydrogel. Dieses kompakte Hydrogel zeichnet sich durch einen besonders hohen Gehalt an Nährstoffionen aus. Der Gehalt an nährstoffbeladenem Ionenaustauschergemisch (wasserfrei) beträgt 39,4 Gew.-%. Der Gesamtwassergehalt des Hydrogels beträgt 51,6 Gew.-%.

Das verwendete Prepolymer C war wie folgt erhalten worden:

865 Teile eines Polyethers, der durch Anlagerung von 60 Gew.-% Ethylenoxid und 40 Gew.-% Propylenoxid an Glycerin erhalten worden ist und eine Hydroxylzahl von 28 aufweist, werden mit 135 Teilen 1,6-Hexamethylendiisocyanat homogen vermischt und auf 105°C erwärmt. Die Reaktionsmischung wird bei dieser Temperatur 7 Stunden gerührt und dann auf Raumtemperatur abgekühlt. Danach wird 0,1 Gew.-% Benzoylchlorid zugefügt und homogen verrührt. Das erhaltene Prepolymer weist einen Isocyanatgruppengehalt von 5,1 Gew.-% und eine Viskosität (bei 23°C) von 7400 mPas auf.

### Beispiel 5

In einem Becherglas werden 11,7 Teile entmineralisiertes Wasser einer Temperatur von +5°C und 1,3 Teile des in Beispiel 1 beschriebenen Prepolymers A durch intensives Rühren innerhalb von 30 Sekunden vermischt. Dieser Reaktionsmischung werden 19 Teile des in Beispiel 1 beschriebenen, nährstoffhaltigen, wasserunlöslichen Ionenaustauschergemisches J1, das 40 Gew.-% Wasser enthält, auf einmal zugefügt und innerhalb von weiteren 30 Sekunden mit der Mischung intensiv verrührt. Die Reaktionsmischung wird anschließend in eine offene, kreisrunde Form (innerer Durchmesser: 9,5 cm) gegossen. 110 Sekunden nach dem Beginn des Vermischens der Komponenten erfolgt die Gelbildung, die nach insgesamt 5 Minuten beendet ist. Die entstandene, stabile, 3,5 mm dicke kreisrunde Hydrogelscheibe wird der Form entnommen. Sie eignet sich sehr gut als Unterlegplatte zum Düngen von Einzelpflanzen in Töpfen mit Erdsubstrat. Der Gehalt der Hydrogelscheibe an nährstoffbeladenem Ionenaustauschergemisch (wasserfrei) beträgt 35,6 Gew.-% bzw. 410 g/dm³. Der Gesamtwassergehalt der Hydrogelscheibe beträgt 60 Gew.-% bzw. 690 g/dm³.

### Beispiel 6

Es wird wie in Beispiel 5 beschrieben gearbeitet, nur wird anstelle des Ionenaustauschergemisches J1 ein Ionenaustauschergemisch J2 verwendet, dessen Herstellung nachstehend beschrieben ist. Es wird ebenfalls eine kreisrunde Hydrogelscheibe erhalten, die sich vorzüglich als Unterlegplatte zum Düngen von Einzeltöpfen eignet. Sie wird mit Vorteil bei der Verwendung von salzarmem Gießwasser eingesetzt. Der Gehalt der Hydrogelscheibe an nährstoffbeladenem Ionenaustauschergemisch (wasserfrei) beträgt 35 Gew.-%; der Gesamtwassergehalt der Scheibe beträgt 60 Gew.-%.

Das verwendete Ionenaustauschergemisch J2 wurde wie folgt erhalten:

### Ionenaustauschergemisch J2

Zur Herstellung des mit den Hauptnährstoffen Stickstoff, Phosphor und Kalium und Mikronährstoffen beladenen Ionenaustauschergemisches J2 wurden 490 ml des nachstehend beschriebenen, mit Nitrat, Phosphat und Mikronährstoffen beladenen, feuchten, schwachbasischen Anionenaustauschers AA und 150 ml des nachstehend beschriebenen, mit Kalium und Ammonium beladenen schwachsauren Kationenaustauschers KA gemischt und im Rotationsverdampfer im Vakuum (24 mbar) bei 60°C partiell getrocknet. Ausbeute 315 g rieselfähiges Gemisch:

| | |
|---|---|
| Wassergehalt: | 7% |
| Gehalt an Nitratstickstoff: | 35,2 mg/g |
| Gehalt an Ammoniumstickstoff: | 7,0 mg/g |
| Gehalt an Phosphor: | 7,8 mg/g |
| Gehalt an Kalium: | 30,0 mg/g |

8

**0 046 896**

Die verwendeten nährstoffbeladenen Harze AA und KA wurden wie folgt erhalten:

Harz AA

1000 ml eines schwachbasischen Anionenaustauschers in der freien Basenform, hergestellt aus einem mit 4% Divinylbenzol vernetzten Styrolperlpolymerisat durch Aminomethylierung (Gehalt an schwachbasischen Gruppen: 3 mol/l), werden in 1000 ml vollentsalztem Wasser suspendiert und unter Rühren bei Zimmertemperatur innerhalb 3 Stunden nacheinander mit

| | |
|---|---|
| 5,96 g | Ethylendiamin-tetraessigsäure |
| 27 g | Phosphorsäure (ca. 85%ig) |
| 0,57 g | $Na_2B_4O_7 \cdot 10\ H_2O$ |
| 0,11 g | $(NH_4)_6Mo_7O_{24} \cdot 4\ H_2O$ |
| 5 g | $FeSO_4 \cdot 7\ H_2O$ |
| 0,3 g | $MnSO_4 \cdot H_2O$ |
| 0,045 g | $CuSO_4 \cdot 5\ H_2O$ |
| 0,05 g | $ZnSO_4 \cdot 7\ H_2O$ |
| 250 g | Salpetersäure (ca. 65%ig) |

versetzt. Nach 20stündigem Nachrühren beträgt der pH-Wert in der wäßrigen Phase 4,5. Da so beladene Anionenaustauschharz wird durch Absaugen von der wäßrigen Phase abgetrennt.
Ausbeute 1440 ml feuchtes Produkt.

Harz KA

1000 ml eines schwachsauren Kationenaustauschers in der Säureform (Gehalt an schwachsauren Gruppen: 4,6 mol/l), hergestellt durch saure Hydrolyse eines mit 7% Divinylbenzol und 2% Octadien-1,7 vernetzten Acrylnitril-Perlpolymerisates werden in einer Lösung von 3,75 g Kaliumchlorid in 1 l vollentsalztem Wasser suspendiert und unter Rühren und Kühlen bei 20 bis 25°C innerhalb von 25 Minuten mit 183 g Kaliumhydroxid (in Form einer 84%igen wäßrigen Lösung) versetzt. Nach 3stündigem Nachrühren hat sich in der wäßrigen Phase ein pH-Wert von 7,3 eingestellt. Anschließend werden innerhalb von 2,75 Stunden bei der selben Temperatur 135 ml wäßrige Ammoniaklösung (etwa 25%ig) zugetropft. Dabei steigt der pH-Wert auf 9,4 an. Nach 16stündigem Nachrühren beträgt der pH-Wert 9,2. Das so beladene schwachsaure Kationenaustauschharz wird abgesaugt. Ausbeute: 1620 ml feuchtes Kationenaustauschharz.

Beispiel 7

Düngungsversuche bei Zierpflanzen in Hydrokultur

Mit den erfindungsgemäßen Düngemitteln gemäß Beispiel 1 (geschäumte Gelfolie, Gehalt an nährstoffbeladenem lonenaustauschergemisch 23 g) und Beispiel 2 (massive Gelfolie, Gehalt an nährstoffbeladenem lonenaustauschergemisch 23 g), sowie dem zur Herstellung beider Folien verwendeten, nährstoffbeladenen, perlförmigen lonenaustauschergemisch J1 (in einer Menge von 23 g je Pflanze) wurden vergleichende Düngungsversuche bei Zierpflanzen in Hydrokultur durchgeführt.

Die in Blähton getopften, verkaufsreifen Pflanzen wurden in Wasserschalen (21 × 26 cm), in die die Folien eingelegt wurden bzw. das perlförmige lonenaustauschergemisch eingestreut wurde, unter Gewächshausbedingungen kultiviert. Als Gießwasser wurde Leitungswasser mit einem Salzgehalt entsprechend 800 µS/cm (20°C) verwendet. Der Wasserstand wurde praxisüblich zwischen 4 cm und 1 cm Stauhöhe gehalten.

Die Versuche wurden mit 4 Pflanzenarten durchgeführt: Cissus rhombifolia, Hibiscus »Hybriden«, Philodendron scandens, Dracaena marginata. Von jeder Art wurden 4 Pflanzen eingesetzt. Die Versuchsdauer (Kulturzeit) betrug bei Philodendron scandens 270 Tage, bei allen übrigen Pflanzen 195 Tage.

Bei Versuchsende wurde bei Dracaena marginata der Längenzuwachs festgestellt. Alle übrigen Pflanzen wurden zurückgeschnitten und der Zuwachs aus dem Frischgewicht der abgeschnittenen Triebe oder Ranken ermittelt.

In der nachfolgenden Tabelle sind die Meßergebnisse als Mittelwerte für jede Pflanzenart angegeben.

9

**0 046 896**

Tabelle

Pflanzenwachstum

Zuwachs

| Pflanzenart Meßgröße | Kulturzeit Tage | Düngemittel gemäß Beispiel | | Vergleichsdünger (Ionenaustauschergemisch J 1) |
|---|---|---|---|---|
| | | 1 | 2 | |
| Cissus Triebgew. (g) | 195 | 174 | 166 | 150 |
| Hibiscus Triebgew. (g) | 195 | 115 | 126 | 105 |
| Philodendron Rankengew. (g) | 270 | 321 | 299 | 251 |
| Dracaena Länge (cm) | 195 | 13 | 15 | 11 |

Aus den in der Tabelle aufgeführten Meßwerten geht hervor, daß die mit den erfindungsgemäßen Düngemitteln gedüngten Pflanzen ein stärkeres Wachstum zeigten als die mit dem reinen Ionenaustauschergemisch J1 gedüngten Pflanzen. Die Unterschiede im Zuwachs betrugen 10% bis 36%.

Beispiel 8

Düngungsversuch bei Zierpflanzen in Erdkultur

Mit dem erfindungsgemäßen Düngemittel gemäß Beispiel 5 und dem zur Herstellung dieser Verbundscheiben verwendeten, nährstoffbeladenen, perlförmigen Ionenaustauschergemisch J1 wurden vergleichende Düngungsversuche mit Zierpflanzen in Erdkultur durchgeführt. Dazu wurden Plastiktöpfe (unterer Topfdurchmesser 11 cm) mit den in Torfkultursubstrat getopften, verkaufsreifen Pflanzen in Untersetzschalen (Durchmesser 14,5 cm, Rand 4 cm hoch) eingestellt, wobei gleichzeitig je Topf eine erfindungsgemäße Düngemittelscheibe vom Durchmesser 9,5 cm mit einem Gehalt an nährstoffbeladenem Ionenaustauschergemisch von 19 g bzw. 19 g perlförmiges Ionenaustauschergemisch J1 unter den Pflanzentöpfen angeordnet wurden. Als Gießwasser wurde Leitungswasser mit einem Salzgehalt entsprechend 800 µS/cm (20°C) verwendet. Es wurde dem Bedarf der Pflanzen entsprechend in Abständen von 2 bis 4 Tagen portionsweise in die Untersetzschalen gegeben, wobei die Portionen so bemessen waren, daß das Gießwasser innerhalb von 1 bis 2 Stunden vollständig aufgesaugt wurde.

Die Versuche wurden unter Gewächshausbedingungen mit 2 Pflanzenarten, Hedera helix und Cissus rhombifolia, durchgeführt. Von jeder Art wurden 4 Pflanzen (4 Töpfe) eingesetzt. Die Versuchsdauer betrug 173 Tage. Bei Versuchsende wurden die Pflanzen zurückgeschnitten und der Zuwachs aus dem Frischgewicht der abgeschnittenen Ranken ermittelt. Die Meßergebnisse sind in der nachfolgenden Tabelle als Mittelwerte je Pflanzenart und Topf angegeben.

Tabelle

Pflanzenwachstum

| Pflanzenart | Zuwachs: Rankengewicht in g | |
|---|---|---|
| | Düngemittel gemäß Beispiel 5 | Vergleichsdünger (Ionenaustauschergemisch J 1) |
| Hedera helix | 89 | 73 |
| Cissus rhombifolia | 164 | 152 |

10

Aus den in der Tabelle aufgeführten Meßwerten geht hervor, daß die mit dem erfindungsgemäßen Düngemittel gedüngten Pflanzen von Hedera helix ein wesentlich stärkeres Wachstum zeigten als die Pflanzen in dem Vergleichsversuch. Der Unterschied im Zuwachs betrug hier 22%. Bei Cissus rhombifolia wurde ein um 8% stärkeres Wachstum festgestellt. Darüber hinaus wurden alle mit dem erfindungsgemäßen Düngemittel versorgten Pflanzen bei der Bonitierung nach allgemeinen gärtnerischen Gesichtspunkten (Habitus, Blattfarbe) stets um etwa 0,5 Punkte besser bewertet (bei einer fünfteiligen Bonitierungsskala) als die Pflanzen aus dem Vergleichsversuch.

Ähnlich gute Wachstumsergebnisse wurden mit den erfindungsgemäßen Düngemitteln bei den folgenden Zierpflanzen in Erdkultur erhalten:

Schefflera actinophylla
Ficus benjamina
Codiacum variegatum
Monstera deliciosa
Dracaena fragans »Massangeana«
Nephrolepis exaltata
Spathiphyllum wallisii
Begonia Elatior — Hybriden
Saintpaulia ionantha
Kalanchoe blossfeldiana
Pachypodium camerei
Euphorbia trigona
Kakteen in Sorten
Campanula isophylla
Exacum affine
Vinca
Beloperone guttata
Pachystachys lutea
Cissus antarctica

**Patentansprüche**

1. Düngemittel auf Basis Pflanzennährstoffe enthaltender Hydrogele, dadurch gekennzeichnet, daß sie in kovalent vernetzte Hydrogele eingebettete, mit Pflanzennährstoffen beladene Ionenaustauscher enthalten.

2. Düngemittel gemäß Anspruch 1, dadurch gekennzeichnet, daß das Verhältnis mit Pflanzennährstoffen beladener Ionenaustauscher/Hydrogel 10 : 90 bis 90 : 10 beträgt.

3. Düngemittel gemäß Ansprüchen 1 und 2, dadurch gekennzeichnet, daß der Gehalt des Hydrogels an makromolekularer Substanz mindestens 5 Gew.-%, bezogen auf das Gesamtgewicht des Hydrogels, beträgt.

4. Düngemittel gemäß Ansprüchen 1 bis 3, dadurch gekennzeichnet, daß das Gewichtsverhältnis gelbildende Substanz/Vernetzungsmittel in den makromolekularen Substanzen 1 : 0,01 bis 0,5 beträgt.

5. Düngemittel gemäß Ansprüchen 1 bis 3, dadurch gekennzeichnet, daß als konvalent vernetzte Hydrogele Polyurethanpolyharnstoff-Hydrogele oder modifizierte Polyurethanpolyharnstoff-Hydrogele verwendet werden.

6. Düngemittel gemäß Anspruch 5, dadurch gekennzeichnet, daß der Gehalt der Prepolymere bzw. Semiprepolymere an Isocyanatgruppen 2 bis 10 Gew.-%, bezogen auf das Gewicht des Prepolymer bzw. Semiprepolymer, beträgt.

7. Verfahren zur Herstellung von Düngemitteln auf Basis Pflanzennährstoffe enthaltender Hydrogele, dadurch gekennzeichnet, daß man mit Pflanzennährstoffen beladene Ionenaustauscher in kovalent vernetzte Hydrogele eingelt.

**Claims**

1. Fertilisers based on hydrogels containing plant nutrients, characterised in that they contain ion exchangers which are laden with plant nutrients and are embedded in covalently crosslinked hydrogels.

2. Fertilisers according to Claim 1, characterised in that the ratio of plant nutrient-laden ion exchanger to hydrogel is 10 : 90 to 90 : 10.

3. Fertilisers according to Claims 1 and 2, characterised in that the content of macromolecular substance in the hydrogel is at least 5% by weight relative to the total weight of the hydrogel.

4. Fertilisers according to Claims 1 to 3, characterised in that the weight ratio of gel-formig substance to crosslinking agent in the macromolecular substances is 1 : 0.01 to 0.5.

**0 046 896**

5. Fertilisers according to Claims 1 to 3, characterised in that polyurethane-polyurea hydrogels or modified polyurethane-polyurea hydrogels are used as covalently crosslinked hydrogels.

6. Fertilisers according to Claim 5, characterised in that the content of isocyanate groups in the prepolymers or semi-prepolymers is 2 to 10% by weight, relative to the weight of the prepolymer or semi-prepolymer.

7. Process for the preparation of fertilisers based on hydrogels containing plant nutrients, characterised in that ion exchangers laden with plant nutrients are embedded in covalently crosslinked hydrogels.

## Revendications

1. Engrais à base d'hydrogels contenant des substances nutritives pour les plantes, caractérisés en ce qu'ils renferment des échangeurs ioniques noyés dans des hydrogels réticulés par covalence, chargés de substances nutritives pour les plantes.

2. Engrais suivant la revendication 1, caractérisés en ce que le rapport de l'échangeur ionique chargé de substances nutritives pour les plantes à l'hydrogel a une valeur de 10 : 90 à 90 : 10.

3. Engrais suivant les revendications 1 et 2, caractérisés en ce que la teneur de l'hydrogel en substance macromoléculaire est d'au moins 5% en poids par rapport au poids total d'hydrogel.

4. Engrais suivant les revendications 1 à 3, caractérisés en ce que le rapport en poids de la substance gélifiante à l'agent de réticulation dans les substances macromoléculaires a une valeur de 1 : 0,01 à 0,5.

5. Engrais suivant les revendications 1 à 3, caractérisés en ce qu'on utilise comme hydrogels réticulés par covalence des hydrogels de polyuréthanne-polyurée ou des hydrogels de polyuréthanne-polyurée modifiés.

6. Engrais suivant la revendication 5, caractérisés en ce que la teneur des prépolymères ou des semiprépolymères en groupes isocyanate est de 2 à 10% en poids par rapport au poids de prépolymère ou, respectivement, de semi-prépolymère.

7. Procédé de production d'engrais à base d'hydrogels contenant des substances nutritives pour les plantes, caractérisé en ce qu'on incorpore des échangeurs ioniques chargés de substances nutritives pour les plantes dans des hydrogels réticulés par covalence.